# EUROPÄISCHE PATENTANMELDUNG

(11) **EP 2 335 829 A1**
(43) Veröffentlichungstag der Anmeldung: **22.06.2011**
(21) Anmeldenummer: 10015285.9
(22) Anmeldetag: 03.12.2010
(51) Int. Cl.: B02C 18/14, B02C 18/18

(54) **Vorrichtung zum Zerkleinern von Spänen**

(30) Priorität: 17.12.2009 DE 202009017062 U
(71) Anmelder: Kilian, Karl-Heinz, 97944 Boxberg-Windischbuch (DE)
(72) Erfinder: Kilian, Karl-Heinz, 97944 Boxberg-Windischbuch (DE)
(74) Vertreter: Müller, Barbara

(57) **Zusammenfassung**

Eine Vorrichtung (10) zum Zerkleinern von Spänen (12) besitzt ein Gehäuse (14), das an einem Endlosförderer (100) für Späne (12) platziert werden kann. In dem Gehäuse (14) ist zumindest eine Messerwelle (32) rotierbar gelagert. An der Messerwelle (32) sind zumindest zwei Schneidmodule (60) lösbar befestigt. Die Messerwelle (32) wirkt mit einer feststehenden Messerleiste (80) zusammen. Die Schneidmodule (60) können jeweils einzeln auf die Messerwelle (32) aufgesetzt werden und so lösbar an der Messerwelle (32) befestigt werden, dass in Rotationsrichtung (50) der Messerwelle (32) gesehen jeweils zumindest zwei Schneidmodule (60) vorhanden sind.

## Beschreibung

### TECHNISCHES GEBIET

Die Erfindung betrifft eine Vorrichtung zum Zerkleinern von Spänen. Beim Betreiben von Drehmaschinen fallen regelmäßig große Mengen von Spänen an, beispielsweise von Stahlspänen. Diese Späne werden mittels eines Endlosförderers von der Drehmaschine abtransportiert und in einen Container gefördert. Mittels einer Vorrichtung zum Zerkleinern von Spänen kann das Volumen der Späne deutlich reduziert werden, so dass diese Container weniger häufig geleert werden müssen.

### STAND DER TECHNIK

Insbesondere in der metallverarbeitenden Industrie fallen oft sehr lange, spiralförmige und scharfkantige Metallspäne an, die einen großen Platzbedarf aufweisen. Verheddern sich diese Späne miteinander, führt dies zur Bildung von Späneknäueln, die einen noch größeren Platzbedarf aufweisen können. Bei den Spänen handelt es sich um einen wiederverwertbaren Rohstoff, der zum Recycling in Containern gesammelt wird. Diese Container können nur ein bestimmtes Volumen an Spänen aufnehmen. Daher ist es vorteilhaft, möglichst kleine Späne zu erhalten, um den Volumenbedarf der Späne zu reduzieren und so eine möglichst große Masse an Spänen in einem Container unterbringen zu können.

Die Späne sind regelmäßig sehr scharfkantig, so dass die Späne in der Regel nicht mit bloßen Händen zusammengedrückt werden können, um mehr Platz im Container zu schaffen. Das Verletzungsrisiko für die Mitarbeiter wäre dabei zu groß.

Zu diesem Zweck sind Vorrichtungen zum Zerkleinern von Spänen bekannt, die eine oder mehrere rotierbare Wellen besitzen, die jeweils mit Schneidmessern bestückt sind. Eine entsprechende Vorrichtung ist beispielsweise aus der DE 44 06 675 A1 bekannt. Auf die rotierbare Messerwelle werden mehrere scheibenförmige Schneidmesser hintereinander aufgeschoben und in dieser aufgefädelten Reihenfolge an der Messerwelle befestigt.

Die einzelnen Schneidzähne der Schneidmesser können im Betrieb stumpf werden oder abbrechen, was ein Auswechseln der Schneidmesser notwendig macht. In diesem Fall muss regelmäßig die Messerwelle mit allen Schneidmessern aus dem Gehäuse ausgebaut werden, so dass die äußeren Schneidmesser bis zu dem auszuwechselnden Schneidmesser von der Messerwelle entfernt werden können. Nach dem Auswechseln des defekten Schneidmessers durch ein neues Schneidmesser müssen die entfernten, funktionsfähigen Schneidmesser wieder an der Messerwelle befestigt werden und diese muss anschließend wieder in dem Gehäuse eingebaut werden. Ein solcher Reparaturvorgang ist mit einem hohen Arbeits- und Zeitaufwand verbunden und damit wirtschaftlich ungünstig. Darüber hinaus ist ein Zerkleinern der Späne während des Reparaturvorgangs nicht möglich, was gegebenenfalls auch einen Produktionsstopp der Drehmaschinen zur Folge haben kann.

Bei den bekannten Vorrichtungen handelt es sich in der Regel um separate Geräte, die oftmals nicht direkt neben der Drehmaschine oder dem Endlosförderer vorhanden sind. Daher müssen die Späne vom Späneförderer zu dem Spänehäcksler transportieren werden und dort häufig manuell dem Spänehäcksler zugeführt werden. Auch hierbei besteht wieder die Möglichkeit von Verletzungen an den scharfkantigen Spänen.

Insbesondere bei sehr langen Spänen kann es darüber hinaus bereits auf dem Endlosförderer zu einem Verheddern der Späne kommen. Dies kann dazu führen, dass die Späne nicht mehr vom Endlosförderer in einen an dem Endlosförderer platzierten Container fallen, sondern am Endlosförderer hängen bleiben und von diesem wieder zurück zur Drehmaschine transportiert werden. Dadurch kann es zu einem Verstopfen des Endlosförderers und/oder der Drehmaschine kommen, was einen Produktionsstopp nach sich führen kann. In einem solchen Fall muss der Endlosförderer und/oder die Drehmaschine geöffnet werden und die eingezogenen Späne müssen entfernt werden, bevor ein Betrieb von Drehmaschine und Endlosförderer wieder möglich ist. Derartige Instandhaltungsarbeiten sind sehr zeitaufwendig und damit wirtschaftlich nachteilig. Auch muss das Entfernen der Späne in der Regel manuell vorgenommen werden, was eine erhöhte Verletzungsgefahr an den scharfkantigen Spänen mit sich bringt.

### DARSTELLUNG DER ERFINDUNG

Ausgehend von diesem vorbekannten Stand der Technik liegt der Erfindung die Aufgabe zugrunde, eine verbesserte Vorrichtung zum Zerkleinern von Spänen anzugeben, die einen möglichst wartungsarmen Betrieb ermöglicht.

Die Erfindung ist durch die Merkmale des Hauptanspruchs 1 gegeben. Sinnvolle Weiterbildungen der Erfindung sind Gegenstand von sich an den Hauptanspruch anschließenden abhängigen Ansprüchen.

Die erfindungsgemäße Vorrichtung zum Zerkleinern von Spänen besitzt ein Gehäuse, das an einem Endlosförderer für Späne angeordnet werden kann. In dem Gehäuse ist zumindest eine Messerwelle rotierbar gelagert. An jeder dieser Messerwellen können zumindest zwei Schneidmodule lösbar befestigt werden, die mit einer feststehenden Messerleiste zusammenwirken und dadurch ein Zerkleinern der Späne bewirken. Die Schneidmodule können erfindungsgemäß jeweils einzeln auf die Messerwelle aufgesetzt werden und so lösbar an der Messerwelle befestigt werden, dass in Rotationsrichtung der Messerwelle gesehen jeweils zumindest zwei Schneidmodule vorhanden sind.

Diese Art der Befestigung der einzelnen Schneidmodule ermöglicht es, ein defektes Schneidmodul einzeln von der Messerwelle zu lösen und auszutauschen, ohne dass andere, benachbarte Schneidmodule mit betroffen wären. Auch ist es nicht notwendig, die Messerwelle selbst aus dem Gehäuse auszubauen. Das Auswechseln der einzelnen Schneidmodule ist somit unkompliziert und rasch möglich, was die Standzeit der Vorrichtung während einer Wartung deutlich reduziert, so dass die Wirtschaftlichkeit der Vorrichtung erhöht werden kann.

In einer vorteilhaften Ausführungsform erfolgt die Befestigung der Schneidmodule an der Messerwelle über zumindest eine Schraubverbindung. Die einzelnen Schneidmodule können insbesondere mit mehreren Schrauben an der Messerwelle festgeschraubt werden. Diese Art der Befestigung ist einfach umsetzbar und ermöglicht eine feste und dauerhafte Befestigung, die auch größeren Krafteinwirkungen standhalten kann.

Zusätzlich oder alternativ dazu kann die Befestigung der Schneidmodule an der Messerwelle zumindest eine Nut-Feder-Verbindung umfassen. Durch diese Nut-Feder-Verbindung kann neben der Befestigung auch ein leichtes Positionieren der einzelnen Schneidmodule an der Messerwelle ermöglicht werden, was insbesondere für die Erstmontage der einzelnen Schneidmodule wünschenswert sein kann. Vorzugsweise kann die Messerwelle zumindest eine Nut aufweisen, in die die Feder der jeweiligen Schneidmodule eingesetzt werden kann. Die Feder könnte auch ein separates Bauteil darstellen, das in die Nut der Messerwelle und in die Nut der entsprechenden Schneidmodule eingesetzt wird. Die Nut der Messerwelle kann sowohl in Rotationsrichtung der Messerwelle als auch in Längsrichtung der Messerwelle verlaufen.

Zusätzlich oder alternativ dazu kann eine Lagefixierung der Schneidmodule an der Messerwelle auch über einen oder mehrere Pass-Stifte erfolgen. Dazu können in der Messerwelle und in der Unterseite der Schneidmodule Bohrungen vorgesehen werden, in die ein Pass-Stift eingesetzt werden kann. Auch diese Art der Befestigung ermöglicht ein leichtes Positionieren der einzelnen Schneidmodule an der Messerwelle. Die Befestigung der Schneidmodule kann zusätzlich noch über zumindest eine Schraubverbindung erfolgen, auf diese Schraubverbindung könnte gegebenenfalls jedoch auch verzichtet werden.

Die einzelnen Schneidmodule weisen jeweils zumindest einen Schneidzahn auf, der mit der feststehenden Messerleiste der Vorrichtung zusammenwirkt, um die Späne zu zerkleinern. Die Schneidmodule können dabei so ausgebildet sein, dass jeweils nur ein einzelner Schneidzahn je Schneidmodul vorhanden ist. In einer alternativen Ausführungsform können mehrere Schneidzähne je Schneidmodul vorhanden sein. Dies kann beispielsweise dadurch realisiert werden, dass bei gleicher Breite des Schneidmoduls statt eines mittleren Schneidzahns zumindest zwei seitliche, außen liegende Schneidzähne vorhanden sind. Alternativ oder zusätzlich dazu könnte das Schneidmodul auch entsprechend breiter ausgebildet sein und mehrere Schneidzähne besitzen.

In einer bevorzugten Ausführungsform können die Schneidmodule so an der Messerwelle angeordnet sein, dass die Schneidzähne der in Rotationsrichtung gesehen hintereinander liegenden Schneidmodule versetzt zueinander angeordnet sind. Dieses versetzte Anordnen kann durch unterschiedlich ausgebildete Schneidmodule erfolgen; alternativ dazu können identische Schneidmodule jeweils versetzt, auf Lücke zueinander angeordnet werden.

In einer weiteren bevorzugten Ausführungsform können die Schneidmodule in Längsrichtung gesehen versetzt an der Messerwelle angeordnet sein, so dass die Schneidzähne vergleichbar einem Schraubgewinde an der Messerwelle verteilt vorhanden sind. Durch diese Maßnahme wird die Taktrate des Schneidvorganges geändert. Diese Veränderung kann dazu führen, dass die Gefahr von Knäuelbildung auf der feststehenden Messerleiste weiter verringert wird, wodurch ein noch wartungsärmerer Betrieb ermöglicht wird.

Eine solche Ausrichtung der einzelnen Schneidmodule kann beispielsweise dadurch erreicht werden, dass eine einteilige Welle mit einem entsprechenden Muster für die Positionierung der Schneidmodule gefräst wird. Alternativ dazu könnte auch eine Sternwelle verwendet werden, auf der entsprechende Muffen versetzt angeordnet werden. An den Muffen können dann die einzelnen Schneidmodule befestigt werden.

Vorzugsweise kann zwischen jeweils zwei in Längsrichtung benachbarten Schneidmodulen eine Räumscheibe vorhanden sein, die insbesondere an der Messerwelle befestigt sein kann. Diese kann einteilig ausgebildet sein, so dass die Räumscheibe auf die Messerwelle aufgefädelt werden kann. Alternativ dazu kann die Räumscheibe ebenfalls modulartig und damit vergleichbar zu den Schneidmodulen aufgebaut sein. Die Räumscheiben können jeweils mehrere Räumzähne aufweisen, die im Gegensatz zu den Schneidzähnen stumpf ausgebildet sind. Bei der Rotation der Messerwelle sollen diese Räumzähne nicht mit der feststehenden Messerleiste zusammenwirken. Die feststehende Messerleiste sollte daher in dieser Ausführungsform mehrere Aussparungen aufweisen, die so groß ausgebildet sind, dass sie die Räumzähne bei der Rotation der Messerwelle ungehindert passieren lassen.

Bei der Rotation der Messerwelle greifen die Räumzähne solche Späne, die auf der feststehenden Messerleiste und oberhalb der Aussparungen zu liegen kamen, wodurch diese Späne ein Stück weit mit transportiert werden. Auf diese Weise können sich die Späne auf der feststehenden Messerleiste nicht so leicht ineinander verheddern und werden beständig leicht bewegt. Diese Bewegung bringt die Späne auch wieder in denjenigen Bereich der feststehenden Messerleiste, der mit den Schneidzähnen zusammenwirkt. Auf diese Weise kann ein kontinuierlicher Zerkleinerungsvorgang auch dann erreicht werden, wenn keine Späne vom Endlosförderer nachtransportiert werden.

Bei der Verwendung einer Sternwelle kann jeweils zwischen zwei Muffen für die Schneidmodule eine Räumscheibe positioniert werden. Alternativ dazu kann die Räumscheibe auch auf die Muffen für die Schneidmodule geschoben werden und an dieser gegebenenfalls noch befestigt werden.

In vorteilhafter Weise können in dem Gehäuse der Vorrichtung zwei Messerwellen rotierbar gelagert sein, an denen jeweils mehrere Schneidmodule lösbar befestigt werden können. Die beiden Messerwellen können mit derselben feststehenden Messerleiste zusammenwirken, die zwischen den beiden rotierbaren Messerwellen vorhanden sein kann. In diesem Fall könnte eine der beiden Messerwellen im Uhrzeigersinn und die andere der beiden Messerwellen gegen den Uhrzeigersinn rotieren. Durch die Ausbildung mit zwei rotierenden Messerwellen verringert sich zusätzlich die Gefahr der Knäuelbildung auf der feststehenden Messerleiste, so dass ein besonders störungsarmer Betrieb möglich ist.

Vorzugsweise kann die Vorrichtung so nahe an einem Endlosförderer für Späne angeordnet werden, dass diejenigen Späne, die nicht selbständig vom Endlosförderer abfallen, durch die an der Messerwelle befestigten Schneidmodule vom Endlosförderer abgestreift werden können. Die Drehrichtung des Endlosförderers und die Rotationsrichtung der entsprechenden Messerwelle sollten in diesem Fall entgegengesetzt zueinander ausgerichtet sein. Durch einen entsprechenden Schliff der Schneidzähne können sich diese an den Spänen festhaken und die Späne vom Endlosförderer weg, hin zu den feststehenden Messerleisten transportieren, wo die Späne zerkleinert werden können.

In einer besonders bevorzugten Ausführungsform kann das Gehäuse der Vorrichtung fahrbar ausgebildet sein. Die Vorrichtung ist damit mobil ausgebildet und kann einfach an den gewünschten Einsatzort transportiert werden. In einem Betrieb mit mehreren Drehmaschinen müsste so nicht für jede der Drehmaschinen eine eigene Vorrichtung vorhanden sein. Vielmehr kann eine einzige Zerkleinerungsvorrichtung ausreichend sein, die jeweils an derjenigen Drehmaschine platziert werden kann, bei der die längsten Späne anfallen.

Alternativ dazu könnte das Gehäuse der Vorrichtung auch fest an einem Endlosförderer befestigt werden, beispielsweise mittels einer entsprechenden Flansch-Verbindung.

In einer bevorzugten Ausführungsform kann auch die feststehende Messerleiste modular ausgebildet sein. Die Messerleiste kann dazu mehrere Messereinheiten besitzen, die beispielsweise an einem gemeinsamen Messerhalter befestigt werden können. Dadurch können auch die einzelnen Module der feststehenden Messerleiste einfach ausgetauscht werden, sofern eine der Messereinheiten defekt ist. Die Befestigung der einzelnen Messereinheiten kann beispielsweise über eine oder mehrere Schrauben erfolgen. Alternativ oder zusätzlich dazu kann auch eine Befestigung der einzelnen Messereinheiten an dem Messerhalter mittels zumindest eines Pass-Stiftes erfolgen.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: einen Querschnitt durch eine erste Ausführungsform einer erfindungsgemäßen Vorrichtung, die an einem Endlosförderer platziert ist,
- Fig. 2: eine Seitenansicht eines von der Messerwelle entfernten Schneidmoduls,
- Fig. 3: eine Draufsicht auf ein erfindungsgemäßes Schneidmodul gemäß Fig. 2,
- Fig. 4: eine Draufsicht auf die erfindungsgemäße Vorrichtung gemäß Fig. 1 entlang der Linie IV-IV,
- Fig. 5: einen Querschnitt durch eine zweite Ausführungsform einer erfindungsgemäßen Vorrichtung, die an einem Endlosförderer platziert ist,
- Fig. 6: eine Draufsicht entsprechend Fig. 4 auf die erfindungsgemäße Vorrichtung gemäß Fig. 5,
- Fig. 7: eine Draufsicht auf eine Messerwelle der Vorrichtung gemäß Fig. 4, bei der die Schneidmodule entfernt wurden,
- Fig. 8: ein Querschnitt durch die Messerwelle gemäß Fig. 7,
- Fig. 9: eine Draufsicht auf eine zweite Ausführungsform eines erfindungsgemäßen Schneidmoduls,
- Fig. 10: eine Seitenansicht des Schneidmoduls gemäß Fig. 9,
- Fig. 11: eine Draufsicht auf die Unterseite des Schneidmoduls gemäß Fig. 9,
- Fig. 12: einen Querschnitt durch die feststehende Messerleiste gemäß Fig. 5 und 6,
- Fig. 13: eine Seitenansicht der feststehenden Messerleiste gemäß Fig. 12,
- Fig. 14: eine Draufsicht auf die Unterseite der feststehenden Messerleiste gemäß Fig. 12,
- Fig. 15: eine Draufsicht auf die Oberseite der feststehenden Messerleiste gemäß Fig. 12 und
- Fig. 16: eine Draufsicht entsprechend Fig. 4 auf eine weitere Ausführungsform der erfindungsgemäßen Vorrichtung, bei der noch nicht alle Schneidmodule an der Messerwelle befestigt worden sind.

### WEGE ZUM AUSFÜHREN DER ERFINDUNG

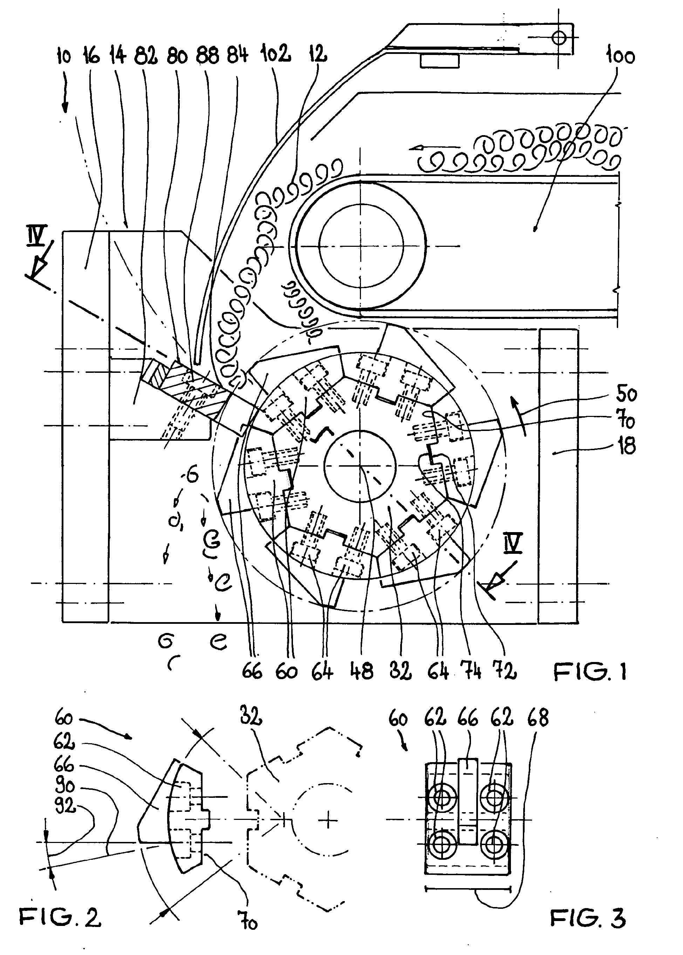

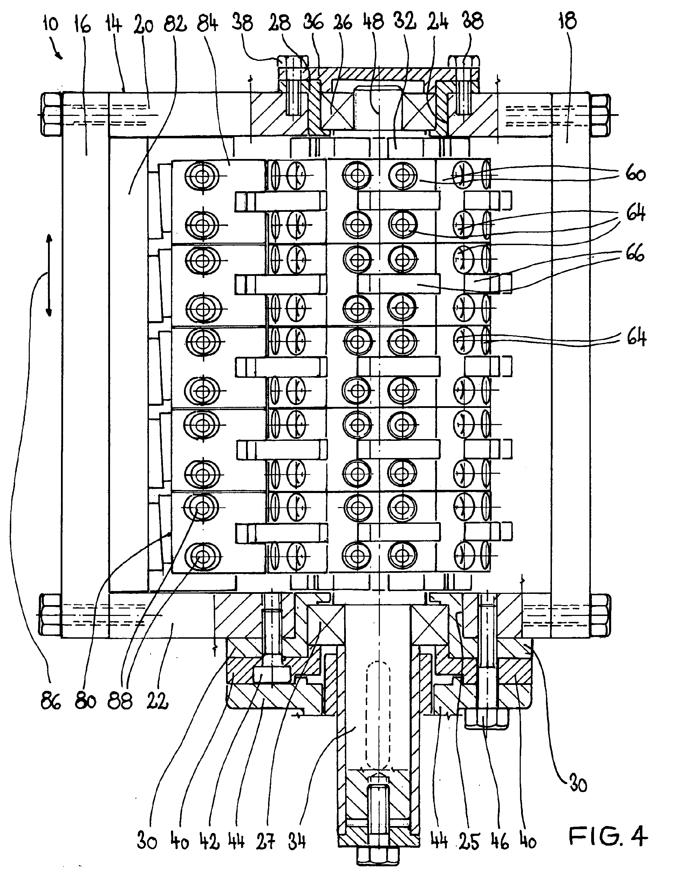

Die Fig. 1 und 4 zeigen eine erste Ausführungsform einer erfindungsgemäßen Vorrichtung 10 zum Zerkleinern von Spänen 12. Die Vorrichtung 10 besitzt ein Gehäuse 14, welches zwei Seitenwände 16, 18 sowie zwei Stirnwände 20, 22 besitzt. In den beiden Stirnwänden 20, 22 befindet sich jeweils eine Öffnung 24, 25. In diesen miteinander fluchtenden Öffnungen 24, 25 ist jeweils ein Rotationslager 26, 27 mittels jeweils eines Lagerflansches 28, 30 befestigt. In den beiden Rotationslagern 26, 27 ist eine Messerwelle 32 rotierbar gelagert. Die Messerwelle 32 kann über eine Antriebswelle 34, die mit einem hier nicht dargestellten Getriebe verbunden ist, angetrieben werden.

Der Lagerflansch 28 ist mit einem Lagerdeckel 36 abgedeckt. Lagerdeckel 36 und Lagerflansch 28 sind mittels zweier Schrauben 38 an der Stirnwand 20 befestigt. Der Lagerflansch 30 ist mit einem Lagerdeckel 40 abgedeckt, der eine Öffnung für die Antriebswelle 34 besitzt. Lagerdeckel 40 und Lagerflansch 30 sind mittels einer Schraube 42 an der Stirnwand 22 befestigt. Die Antriebswelle 34 ist über einen nur ausschnittsweise dargestellten Getriebeflansch 44 mittels einer weiteren Schraube 46 ebenfalls an der Stirnwand 22 des Gehäuses 14 befestigt.

Die Messerwelle 32 kann mittels des nicht dargestellten Getriebes um die Drehachse 48 rotierbar angetrieben werden. Die Rotationsrichtung 50 verläuft im vorliegenden Beispielsfall gegen den Uhrzeigersinn.

Die Messerwelle 32 besitzt im vorliegenden Beispielsfall einen sechseckigen Querschnitt. An jeder der Seitenflächen ist im vorliegenden Beispielsfall ein Schneidmodul 60 befestigt. Die Schneidmodule 60 weisen im vorliegenden Beispielsfall jeweils vier Bohrungen 62 auf. In jede der Bohrungen 62 kann eine Schraube 64 eingreifen, so dass die Schneidmodule 60 über insgesamt vier Schrauben 64 an der Messerwelle 32 befestigt sind. Im vorliegenden Beispielsfall besitzt jedes Schneidmodul 60 einen Schneidzahn 66, der etwa mittig der Breite 68 der Schneidmodule 60 vorhanden ist (siehe auch Fig. 3).

Um die einzelnen Schneidmodule 60 möglichst exakt auf der Messerwelle 32 platzieren zu können, weist jedes der Schneidmodule 60 an seiner Unterseite 70 eine Feder 72 auf. Die Feder 72 der Schneidmodule 60 kann in eine entsprechende Nut 74 der Messerwelle 32 eingesetzt werden, um eine exakte Ausrichtung der einzelnen Schneidmodule 60 zu ermöglichen. Feder 72 und Nut 74 verlaufen im vorliegenden Beispielsfall entlang der Längsrichtung 86 der Messerwelle 32.

Die Schneidmodule 60 können einzeln von der Messerwelle 32 entfernt werden. Nach dem Lösen der Schrauben 64 kann das auszuwechselnde Schneidmodul 60 von der Messerwelle 62 entfernt werden. Die Messerwelle 32 selbst muss nicht aus dem Gehäuse 14 ausgebaut werden. Auch müssen keine weiteren Schneidmodule 60, die nicht ausgetauscht werden sollen, entfernt werden. Die Auswechslung defekter Schneidmodule 60 gestaltet sich damit rasch und unproblematisch und ist wirtschaftlich vorteilhaft.

Die Schneidzähne 66 der Schneidmodule 60 wirken mit einer feststehenden Messerleiste 80 zusammen, um die Späne 12 zu zerkleinern. Die feststehende Messerleiste 80 ist mittels eines Messerhalters 82 an der Seitenwand 16 des Gehäuses 14 befestigt. Die Messerleiste 80 ist modular aufgebaut und besitzt im vorliegenden Beispielsfall fünf Messereinheiten 84. Die Anzahl der Messereinheiten 84 entspricht damit der Anzahl der Schneidmodule 60 in Längsrichtung 86 der Messerwelle 32. Die einzelnen Messereinheiten 84 sind über jeweils zwei Schrauben 88 an dem Messerhalter 82 befestigt. Durch den modularen Aufbau der feststehenden Messerleiste 80 können die einzelnen Messereinheiten 84 im Falle eines Defekts ebenfalls leicht ausgetauscht werden.

Die Ebene 90 der feststehenden Messerleiste 80 ist im vorliegenden Beispielsfall zu den einzelnen Schneidzähnen 66 in einem Winkel 92 geneigt (siehe Fig. 2). Dies ermöglicht einen ziehenden Schnitt, der die Bildung von Späneknäuel auf der feststehenden Messerleiste 80 verringert.

Die Vorrichtung 10 ist mit ihrem Gehäuse 14 an einem Endlosförderer 100 für Späne 12 angeordnet (Fig. 1). Die Späne 12 werden vom Endlosförderer 100 zu der Vorrichtung 10 transportiert und fallen mit Hilfe einer Führungsschiene 102 in den Bereich der feststehenden Messerleiste 80. Die Vorrichtung 10 ist dabei so nahe an dem Endlosförderer 100 platziert, dass die einzelnen Schneidzähne 66 der Schneidmodule 60 als Abstreifer für solche Späne 12 dienen können, die nicht von selbst von dem Endlosförderer 100 abfallen. Auf diese Weise kann verhindert werden, dass einige Späne 12 vom Endlosförderer 100 wieder zurück in Richtung der hier nicht dargestellten Drehmaschine transportiert werden, was zu Verstopfungen führen kann.

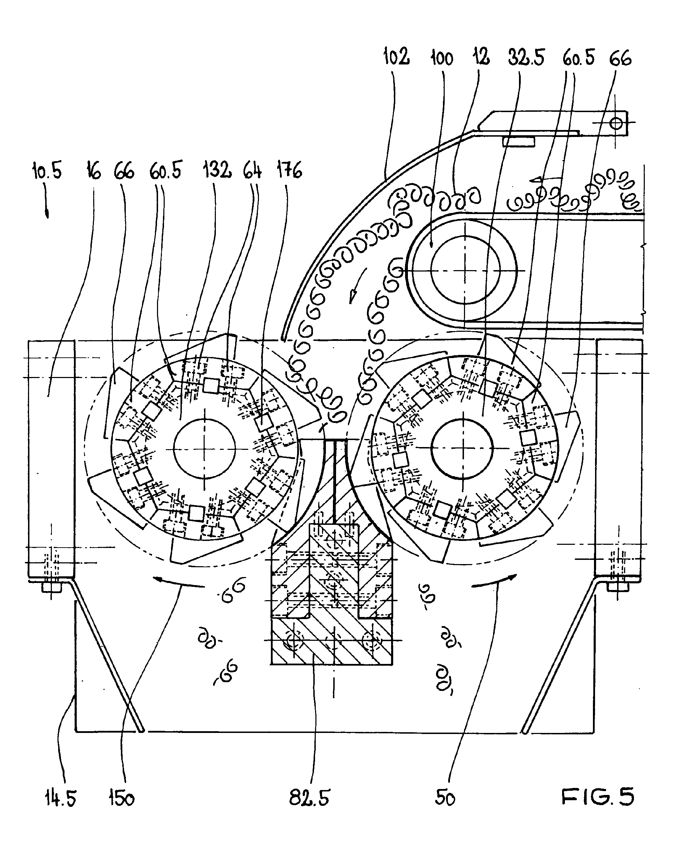

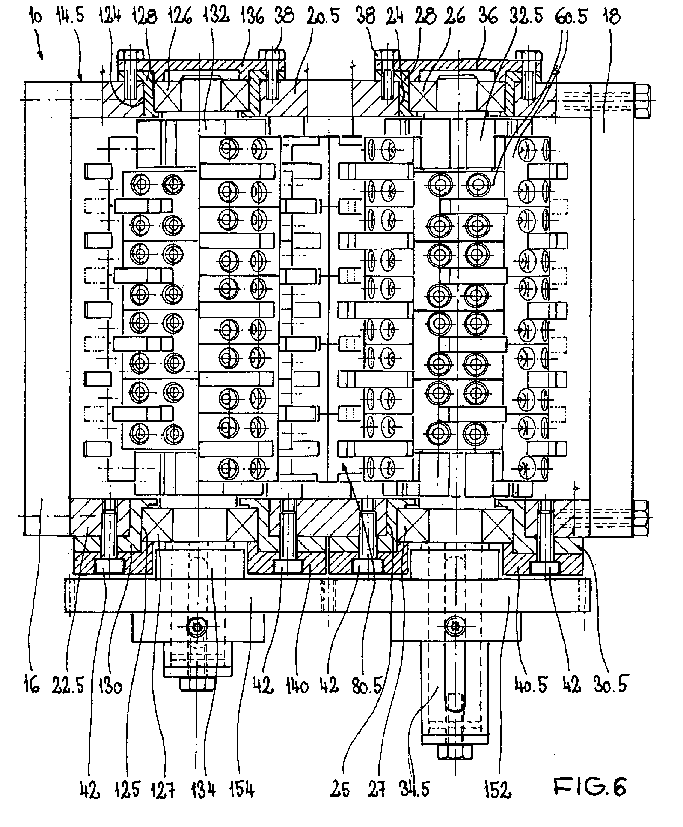

In den Fig. 5 und 6 ist eine zweite Ausführungsform einer erfindungsgemäßen Vorrichtung 10.5 zum Zerkleinern von Spänen 12 dargestellt. Die Vorrichtung 10.5 besitzt ein dem Gehäuse 14 vergleichbares Gehäuse 14.5 mit zwei Seitenwänden 16, 18 und mit zwei Stirnwänden 20.5, 22.5. In der Stirnwand 20.5 befinden sich zwei Öffnungen 24, 124, die mit zwei Öffnungen 25, 125 in der Stirnwand 22.5 fluchten. In den Öffnungen 24, 25 und 124, 125 ist jeweils ein Rotationslager 26, 27 und 126, 127 mittels jeweils eines Lagerflansches 28, 30.5 und 128, 130 befestigt.

In den beiden Rotationslagern 26, 27 ist eine Messerwelle 32.5 rotierbar gelagert. Die Messerwelle 32.5 kann über eine Antriebswelle 34.5, die mit einem hier nicht dargestellten Getriebe verbunden ist, angetrieben werden. In den beiden Rotationslagern 126, 127 ist eine zweite Messerwelle 132 ebenfalls rotierbar gelagert. Die Messerwelle 132 verfügt im vorliegenden Beispielsfall über keinen eigenen Antrieb. Der Antrieb der Messerwelle 132 erfolgt über zwei ineinander greifende Zahnräder 152 und 154, von denen das Zahnrad 152 auf der Antriebswelle 34.5 der Messerwelle 32.5 und das Zahnrad 154 auf der Antriebswelle 134 der Messerwelle 132 rotationsfest befestigt ist. Durch die Rotation der Messerwelle 32.5 in Rotationsrichtung 50 rotiert die Messerwelle 132 in eine der Rotationsrichtung 50 entgegengesetzte Rotationsrichtung 150.

Die Lagerflansche 28, 128 sind jeweils mit einem Lagerdeckel 36, 136 abgedeckt. Lagerdeckel 36, 136 und Lagerflansch 28, 128 sind jeweils mittels zweier Schrauben 38 an der Stirnwand 20.5 befestigt. Die Lagerflansche 30.5, 130 sind jeweils mit einem Lagerdeckel 40.5, 140 abgedeckt. In den Lagerdeckeln 40.5, 140 befindet sich jeweils eine Öffnung für die Antriebswellen 34.5,134. Lagerdeckel 40.5 und Lagerflansch 30.5 sind mittels zweier Schrauben 42 an der Stirnwand 22.5 befestigt. Entsprechend dazu sind Lagerdeckel 140 und Lagerflansch 130 mittels zweier weiterer Schreiben 42 ebenfalls an der Stirnwand 22.5 befestigt.

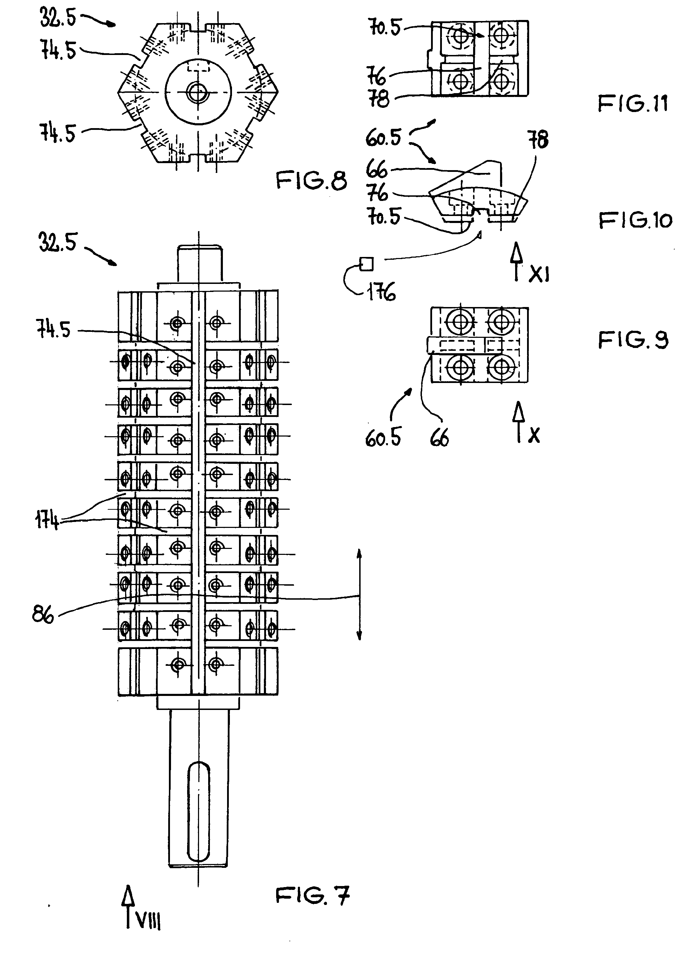

Die Messerwellen 32.5, 132 besitzen im vorliegenden Beispielsfall einen sechseckigen Querschnitt (Fig. 8). Im Gegensatz zu der Messerwelle 32 besitzen die beiden Messerwellen 32.5, 132 jeweils mehrere Nute 74.5 und mehrere Nute 174. Die Nute 74.5 verlaufen vergleichbar der Nute 74 in Längsrichtung 86 der Messerwelle 32.5, 132. Die Nute 174 verlaufen jeweils etwa senkrecht der Nute 74.5 und damit in Rotationsrichtung 50, 150 der Vorrichtung 10.5.

An jeder der Seitenflächen ist im vorliegenden Beispielsfall ein Schneidmodul 60.5 befestigt. Die Schneidmodule 60.5 entsprechen im Wesentlichen den Schneidmodulen 60. Wie den Fig. 9 bis 11 zu entnehmen ist, besitzen die Schneidmodule 60.5 an ihrer Unterseite 70.5 jedoch keine in Längsrichtung 86 der Messerwelle 32.5, 132 verlaufende Feder 72 sondern eine Nut 76. Darüber hinaus besitzen die Schneidmodule 60.5 an ihrer Unterseite 70.5 eine zusätzliche Feder 78, die in Rotationsrichtung 50, 150 der Messerwellen 32.5, 132 verläuft. Mit dieser Feder 78 können die Schneidmodule 60.5 in die Nute 174 der Messerwelle 132 gesetzt werden. In die Nute 74.5 der Messerwelle 132 kann eine separate Feder 176, die auch in die Nute 76 der jeweiligen Schneidmodule 60.5 passt, eingesetzt werden. Auf diese Weise ist eine möglichst exakte Positionierung der einzelnen Schneidmodule 60.5 auf der Messerwelle 32.5, 132 möglich.

Die Vorrichtung 10.5 ist mit ihrem Gehäuse 14.5 ebenfalls so nahe an einem Endlosförderer 100 für Späne 12 angeordnet, dass die einzelnen Schneidzähne 66 der Schneidmodule 60.5 der Messerwelle 32.5 als Abstreifer für solche Späne 12 dienen können, die nicht von selbst von dem Endlosförderer 90 abfallen. Auf diese Weise kann verhindert werden, dass einige Späne 12 vom Endlosförderer 90 wieder zurück in Richtung der hier nicht dargestellten Drehmaschine transportiert werden, was zu Verstopfungen führen kann.

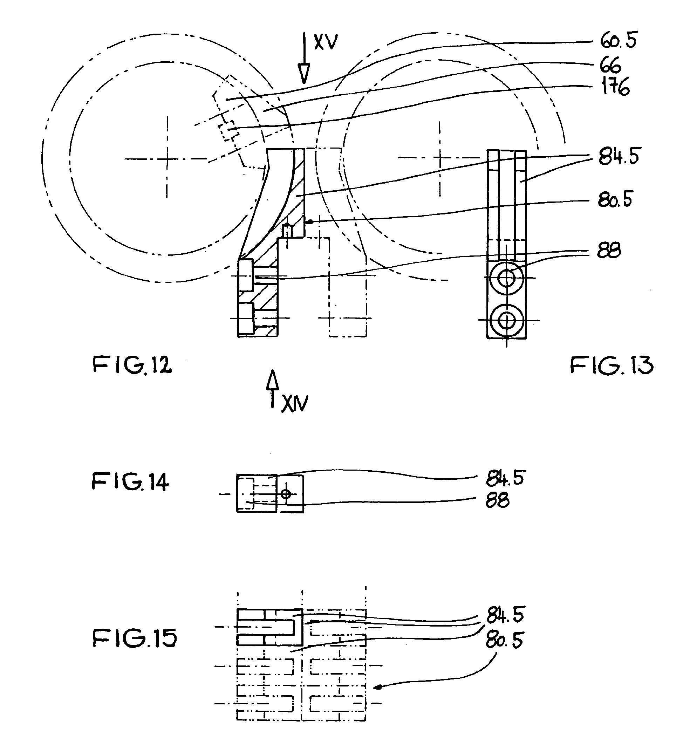

Die einzelnen Schneidezähne 66 der Schneidmodule 60.5 wirken mit einer feststehenden Messerleiste 80.5 zusammen, um die Späne 12 zu zerkleinern. Die feststehende Messerleiste 80.5 ist mittels eines Messerhalters 82.5 an den beiden Stirnwänden 20.5 und 22.5 des Gehäuses 14.5 befestigt. Die feststehende Messerleiste 80.5 besitzt beidseitig eine Vielzahl von Messereinheiten 84.5, die jeweils mittels zweier Schrauben 88 an einer Seite des Messerhalters 82.5 befestigt sind (siehe auch Fig. 12 bis 15). Jeweils zwei einander gegenüber liegende Messereinheiten 84.5 könnten auch zu einer größeren Messereinheit zusammengefasst werden, um den Montageaufwand zu reduzieren.

Im Gegensatz zu dem hier dargestellten Ausführungsbeispiel könnte die feststehende Messerleiste 80.5 auch einen dachgiebelartigen Aufsatz besitzen, der einteilig mit den einzelnen Messereinheiten 84.5 ausgebildet sein kann. Die zu zerkleinernden Späne könnten sich so nur schwer auf der feststehenden Messerleiste ansammeln, wodurch die Gefahr der Knäuelbildung weiter verringert wird.

Im vorliegenden Beispielsfall ist für jeden Schneidzahn 66 eine eigene Messereinheit 84.5 vorgesehen. Die Messereinheiten 84.5 könnten jedoch auch entsprechend breiter ausgebildet sein, so dass mehrere Schneidzähne 66 mit einer Messereinheit zusammenwirken können.

Im Gegensatz zu dem Ausführungsbeispiel gemäß den Fig. 1 und 4 sind die einzelnen Schneidmodule 60.5 im vorliegenden Beispielsfall jeweils versetzt zueinander angebracht; die Schneidzähne 66 von in Rotationsrichtung 50, 150 hintereinander liegenden Schneidmodulen 60.5 fluchten also nicht miteinander. Dadurch bleiben in der feststehenden Messerleiste 80.5 regelmäßig einige Messereinheiten 84.5 ungenutzt, was zu einer Auflockerung der auf der Messerleiste 80.5 liegenden Späne 12 führen kann.

Ein vergleichbarer Effekt kann beispielsweise auch durch die Verwendung von zwei verschiedenen Schneidmodulen auf einer Messerwelle erreicht werden. Beispielsweise könnten zwei Typen von Schneidmodulen alternierend an der Messerwelle befestigt werden. Während der erste Typ den Schneidmodulen 60, 60.5 entsprechen könnte, könnte der zweite Typ Schneidmodule bei gleicher Breite zwei Schneidzähne 66 aufweisen, die jeweils im seitlichen Randbereich der Schneidmodule angeordnet sein könnten. In diesem Fall könnte jedes Schneidmodul mit lediglich zwei Schrauben, die im mittleren Bereich der Schneidmodule vorhanden wären, an der Messerleiste befestigt werden.

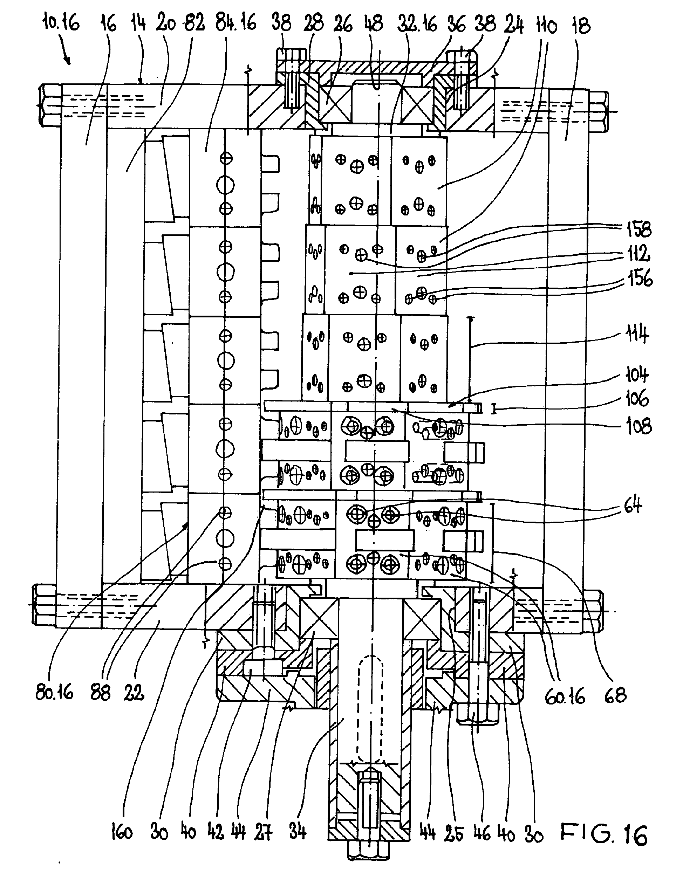

Die Fig. 16 zeigt eine alternative Ausführungsform einer erfindungsgemäßen Vorrichtung 10.16 zum Zerkleinern von Spänen 12. Im vorliegenden Beispielsfall ist eine Vorrichtung 10.16 mit lediglich einer Messerwelle 32.16 dargestellt, die gezeigten Merkmale können jedoch auch bei einer Vorrichtung mit zwei Messerwellen entsprechend den Fig. 5 und 6 Verwendung finden. Das Gehäuse 14 der Vorrichtung 10.16 entspricht dem Gehäuse 14 der Vorrichtung 10 gemäß den Fig. 1 bis 4. In den beiden Rotationslagern 26, 27 des Gehäuses 14 ist eine Messerwelle 32.16 rotierbar gelagert, die über eine Antriebswelle 34 angetrieben werden kann.

Die Messerwelle 32.16 ist im vorliegenden Beispielsfall als Sternwelle ausgebildet. Auf die Messerwelle 32.16 sind im vorliegenden Beispielsfall fünf Muffen 110 aufgeschoben worden. Die einzelnen Muffen 110 sind zwar identisch ausgebildet, wurden jedoch um jeweils einen Winkel von fünf Altgrad versetzt an der Messerwelle 32.16 befestigt. In jeder der Seitenflächen 112 der Muffen 110 sind vier Gewindebohrungen 156 zur Befestigung der Schneidmodule 60.16 mittels der Schrauben 64 vorgesehen. Darüber hinaus befinden sich in jeder der Seitenflächen 112 der Muffen 110 zwei weitere Bohrungen 158. In die Bohrungen 158 kann jeweils ein hier nicht dargestellter Pass-Stift eingesetzt werden, für den in der Unterseite der Schneidmodule 60.16 eine entsprechende Bohrung vorgesehen ist. Abgesehen von ihrer Unterseite entsprechen die Schneidmodule 60.16 den Schneidmodulen 60. Auf diese Weise kann eine schnelle und einfache Positionierung der Schneidmodule 60.16 an der Messerwelle 32.16 erfolgen. Auch wenn zwei Bohrungen zur genauen Ausrichtung der Schneidmodule 60.16 an der Messerwelle 32.16 ausreichend sind, könnten auch mehr als zwei Bohrungen vorgesehen werden.

Die Schneidmodule 60.16 können einzeln von der Messerwelle 32.16 entfernt werden, ohne die Messerwelle 32.16 aus dem Gehäuse 14 ausbauen zu müssen. Im vorliegenden Beispielsfall sind lediglich an zwei der Muffen 110 die Schneidmodule 32.16 bereits befestigt worden, die übrigen Muffen 110 müssen noch mit Schneidmodulen 32.16 bestückt werden. Dennoch konnte die Messerwelle 32.16 bereits in dem Gehäuse 14 eingebaut werden.

Zwischen jeweils zwei in Längsrichtung 68 benachbarten Schneidmodulen 32.16 ist im vorliegenden Beispielsfall eine Räumscheibe 104 vorhanden. Die Räumscheibe 104 wird auf die einzelnen Muffen 110 aufgeschoben und auf diese Weise an der Messerwelle 32.16 befestigt. Da auf die Räumscheibe 104 nur vergleichbar kleine Kräfte einwirken, reicht diese formschlüssige Befestigung im Regelfall aus, allerdings kann auch eine zusätzliche Befestigung, beispielsweise mittels Schrauben, vorgesehen werden. Um die Positionierung der Räumscheibe 106 auf den einzelnen Muffen 110 zu ermöglichen, entspricht die Länge 114 der Muffe 110 im vorliegenden Beispielsfall der Summe der Breite 68 der Schneidmodule 60.16 und der Breite 106 der Räumscheibe 104.

Im vorliegenden Beispielsfall ist die Räumscheibe 104 einteilig ausgebildet, so dass diese auf die Muffen 110 und damit auch auf die Messerwelle 32.16 aufgefädelt werden kann. Im Gegensatz dazu könnte die Räumscheibe 104 auch vergleichbar zu den Schneidmodulen 60.16 und damit modulartig aufgebaut sein. In dem letztgenannten Fall könnte eine Befestigung der einzelnen Module der Räumscheibe, beispielsweise über einen oder mehrere Pass-Stifte, an den Muffen 110 oder direkt an der Messerwelle 32.16 erfolgen.

Die Räumscheibe 104 weist mehrere Räumzähne 108 auf, die im Gegensatz zu den Schneidzähnen 66 stumpf ausgebildet sind. Bei der Rotation der Messerwelle 32.16 wirken die Räumzähne 108 nicht mit der feststehenden Messerleiste 80.16 zusammen. Die feststehende Messerleiste 80.16 weist daher mehrere Aussparungen 160 auf, die so groß ausgebildet sind, dass sie die Räumzähne 108 bei der Rotation der Messerwelle 32.16 ungehindert passieren lassen. Dabei können die Räumzähne 108 solche Späne 12 greifen, die auf der feststehenden Messerleiste 80.16 und oberhalb der Aussparungen 160 zu liegen kamen, wodurch diese Späne 12 ein Stück weit mit transportiert werden. Auf diese Weise werden die Späne 12 auch wieder in denjenigen Bereich der feststehenden Messerleiste 80.16 transportiert, der mit den Schneidzähnen 66 zusammenwirkt, wodurch ein effektiver Zerkleinerungsvorgang erreicht wird.

Die Befestigung der feststehenden Messerleiste 80.16 erfolgt analog zu der Befestigung der feststehenden Messerleiste 80. Auch die feststehende Messerleiste 80.16 ist modular aufgebaut und besitzt im vorliegenden Beispielsfall fünf Messereinheiten 84.16.

Die von der Vorrichtung 10, 10.5, 10.16 zerkleinerten Späne-Häcksel können in einen sich an das Gehäuse 14, 14.5 anschließenden Sammelbehälter fallen, der hier nicht näher dargestellt ist. Die in diesem Sammelbehälter gesammelten Späne-Häcksel können anschließend in einen größeren Container entleert werden und der Wiederverwertung zugeführt werden. Die Vorrichtung 10, 10.5, 10.16 könnte jedoch auch direkt an einen entsprechend größeren Container angeschlossen werden. Durch die relativ kleinen Späne-Häcksel kann eine deutlich größere Masse an Material in einem solchen Container gesammelt werden, bevor dieser entleert werden muss. Auch ist die Verletzungsgefahr durch die zerkleinerten Späne deutlich geringer.

Im Gegensatz zu den hier dargestellten Ausführungsbeispielen könnte die Unterseite der einzelnen Schneidmodule auch konkav ausgebildet sein. In diesem Fall könnten die einzelnen Messerwellen einen kreisförmigen Querschnitt aufweisen. Die Schrauben zur Befestigung der einzelnen Schneidmodule an der Messerwelle müssen nicht parallel zueinander verlaufen, sondern können auch in Richtung der Rotationsachse der jeweiligen Messerwelle gerichtet sein. Insbesondere bei der Verwendung von Abdeckkappen für Schrauben kann dies vorteilhaft sein, um nicht für jede der Schrauben eine speziell ausgerichtete Abdeckkappe anfertigen zu müssen.

## Patentansprüche

1. Vorrichtung (10, 10.5, 10.16) zum Zerkleinern von Spänen (12)
- mit einem Gehäuse (14, 14.5), das an einem Endlosförderer (100) für Späne (12) platzierbar ist,
- mit zumindest einer in dem Gehäuse (14, 14.5) rotierbar gelagerten Messerwelle (32,32.5,32.16,132), an der zumindest zwei Schneidmodule (60, 60.5, 60.16) lösbar befestigt oder befestigbar sind und
- mit einer mit den Schneidmodulen (60, 60.5, 60.16) der zumindest einen Messerwelle (32, 32.5, 32.16, 132) zusammenwirkenden feststehenden Messerleiste (80, 80.5, 80.16),
- **dadurch gekennzeichnet, dass**
- die Schneidmodule (60, 60.5, 60.16) jeweils einzeln auf die zumindest eine Messerwelle (32, 32.5, 32.16, 132) aufsetzbar und so lösbar befestigt oder befestigbar sind, dass in Rotationsrichtung (50, 150) der Messerwelle (32, 32.5, 32.16, 132) gesehen jeweils zumindest zwei Schneidmodule (60, 60.5, 60.16) vorhanden sind.

2. Vorrichtung nach Anspruch 1,
- **dadurch gekennzeichnet, dass**
- die Befestigung der Schneidmodule (60, 60.5, 60.16) an der Messerwelle (32, 32.5, 32.16, 132) zumindest eine Schraubverbindung umfasst.

3. Vorrichtung nach Anspruch 1 oder 2,
- **dadurch gekennzeichnet, dass**
- die Befestigung der Schneidmodule (60, 60.5) an der Messerwelle (32, 32.5, 132) zumindest eine Nut-Feder-Verbindung umfasst.

4. Vorrichtung nach Anspruch 3,
- **dadurch gekennzeichnet, dass**
- die Messerwelle (32, 32.5, 132) zumindest eine in Längsrichtung (86) oder in Rotationsrichtung (50, 150) der Messerwelle (32, 32.5, 132) verlaufende Nut (74, 74.5 174) aufweist, in die die Feder (72, 78, 176) der Schneidmodule (60, 60.5) einsetzbar ist.

5. Vorrichtung nach einem der vorstehenden Ansprüche,
- **dadurch gekennzeichnet, dass**
- die Schneidmodule (60.16) mittels zumindest eines Pass-Stiftes an der Messerwelle (32.16) befestigbar sind.

6. Vorrichtung nach einem der vorstehenden Ansprüche,
- **dadurch gekennzeichnet, dass**
- zumindest einige der Schneidmodule mehrere Schneidzähne (66) aufweisen.

7. Vorrichtung nach einem der vorstehenden Ansprüche,
- **dadurch gekennzeichnet, dass**
- die Schneidmodule (60.5) so an der Messerwelle (32.5, 132) angeordnet sind, dass die Schneidzähne (66) der in Rotationsrichtung (50, 150) gesehen hintereinander liegenden Schneidmodule (60.5) versetzt zueinander angeordnet sind.

8. Vorrichtung nach einem der vorstehenden Ansprüche,
- **dadurch gekennzeichnet, dass**
- die Schneidmodule (60.16) in Längsrichtung (86) gesehen so versetzt an der Messerwelle (32.16) angeordnet sind, dass
- die Schneidzähne (66) der einzelnen Schneidmodule (60.16) gewindeartig an der Messerwelle (32.16) verteilt vorhanden sind.

9. Vorrichtung nach einem der vorstehenden Ansprüche,
- **dadurch gekennzeichnet, dass**
- zwischen zwei in Längsrichtung (86) benachbarten Schneidmodulen (60.16) eine einteilige oder mehrteilige Räumscheibe (104) vorhanden ist.

10. Vorrichtung nach einem der vorstehenden Ansprüche,
- **dadurch gekennzeichnet, dass**
- in dem Gehäuse (14.5) zwei Messerwellen (32.5, 132) rotierbar gelagert sind, an denen jeweils zumindest zwei Schneidmodule (60.5) lösbar befestigt oder befestigbar sind.

11. Vorrichtung nach einem der vorstehenden Ansprüche,
- **dadurch gekennzeichnet, dass**
- die Vorrichtung (10, 10.5, 10.16) so an einen Endlosförderer (100) für Späne (12) anschließbar ist, dass die vom Endlosförderer (100) transportierten Späne (12) durch die an der Messerwelle (32, 32.5, 32.16) befestigten Schneidmodule (60, 60.5, 60.16) vom Endlosförderer (100) abstreifbar sind.

12. Vorrichtung nach einem der vorstehenden Ansprüche,
- **dadurch gekennzeichnet, dass**
- das Gehäuse (14, 14.5) der Vorrichtung (10, 10.5, 10.16) fahrbar ausgebildet ist.

13. Vorrichtung nach einem der vorstehenden Ansprüche,
- **dadurch gekennzeichnet, dass**
- die feststehende Messerleiste (80, 80.5, 80.16) mehrere Messereinheiten (84, 84.5, 84.16) besitzt und somit modular ausgebildet ist.
